Europäisches Patentamt

European Patent Office

Office européen des brevets

(11) Veröffentlichungsnummer : **0 190 454**
**B1**

(12) **EUROPÄISCHE PATENTSCHRIFT**

(45) Veröffentlichungstag der Patentschrift :
05.04.89

(51) Int. Cl.⁴ : **G 01 F 1/68**

(21) Anmeldenummer : **85116324.6**

(22) Anmeldetag : **20.12.85**

(54) Vorrichtung zur Messung der Masse eines strömenden Mediums.

(30) Priorität : **07.02.85 DE 3504082**

(43) Veröffentlichungstag der Anmeldung :
**13.08.86 Patentblatt 86/33**

(45) Bekanntmachung des Hinweises auf die Patenterteilung : **05.04.89 Patentblatt 89/14**

(84) Benannte Vertragsstaaten :
**DE FR GB IT**

(56) Entgegenhaltungen :
**DE—A— 2 751 196**
**DE—A— 3 214 359**
**GB—A— 2 144 859**
**US—A— 4 393 697**

(73) Patentinhaber : **ROBERT BOSCH GMBH**
**Postfach 10 60 50**
**D-7000 Stuttgart 10 (DE)**

(72) Erfinder : **Kuhn, Ulrich, Dr. Dipl.-Phys.**
**Birkenweg 5**
**D-7253 Renningen 2 (DE)**

(74) Vertreter : **Knetsch, Manfred et al**
**Postfach 10 60 50**
**D-7000 Stuttgart 10 (DE)**

Jouve, 18, rue St-Denis, 75001 Paris, France

EP 0 190 454 B1

## Beschreibung

### Stand der Technik

Die Erfindung geht aus von einer Vorrichtung nach dem ersten Teil von Anspruch 1. Bei vorgeschlagenen Vorrichtungen dieser Art hat sich gezeigt, daß bei Einsatz im Kraftfahrzeug zur Messung der von der Brennkraftmaschine angesaugten Luftmasse beim Einschalten der Vorrichtung eine unerwünscht lange Einschaltzeit vergeht, bis die Vorrichtung mit einer Genauigkeit von beispielsweise 10 % bei einer Leerlaufansaugluftmenge von etwa 10 kg/h arbeitet. Die Verzögerung ist dabei zum Teil auf die erforderliche Aufheizung des temperaturabhängigen Widerstandes auf die bestimmte Widerstandstemperatur bedingt. Bei einer plötzlichen Änderung der angesaugten Luftmasse der Brennkraftmaschine aus dem Leerlaufbereich mit etwa 10 kg/h zum Vollastbereich mit etwa 300 kg/h oder vom Vollastbereich mit etwa 300 kg/h zum Leerlaufbereich mit etwa 10 kg/h vergeht bis zum Erreichen der gewünschten Genauigkeit eine Ansprechzeit, d. h. die Vorrichtung reagiert erst mit einer Verzögerung auf die plötzlichen Änderungen der Ansaugluftmasse. Diese unerwünscht langen Einschalt- und Ansprechzeiten bei Änderungen der Ansaugluftmasse führen dazu, daß bei der Verwendung des Ausgangssignals der Vorrichtung zur Ansteuerung einer Kraftstoffeinspritzanlage die eingespritzte Kraftstoffmenge erst verzögert der angesaugten Luftmenge nachgeführt wird, wodurch es nicht nur zu einem höheren Kraftstoffverbrauch sondern auch zu einem hohen Wert an giftigen Abgasbestandteilen kommt. Untersuchungen haben nun ergeben, daß das ungünstige Verhalten der Vorrichtung beim Einschalten und bei plötzlichen größeren Änderungen der angesaugten Luftmasse darauf beruht, daß zwar die Grobeinstellung des Temperaturprofils über die Längsausdehnung des Trägers der Vorrichtung durch die geregelte Energiezufuhr sehr rasch erfolgt, daß aber für die exakte Einstellung eines neuen Temperaturprofils in den nicht beheizten Randbereichen des Trägers eine bestimmte Wärmemenge erforderlich ist, die als kleiner aber entsprechend lange andauernder Wärmestrom aus dem beheizten Bereich des Trägers entzogen wird. Zwar wird unabhängig von der strömenden Luftmasse die Widerstandstemperatur des temperaturabhängigen Widerstandes konstant geregelt, jedoch ändert sich die Temperatur der Randbereiche in Abhängigkeit von der Ansaugluftmasse, weshalb sich auch das Temperaturprofil in Längsausdehnung des Trägers mit Änderung der Ansaugluftmasse ändert. Der Wärmestrom zu den Randbereichen des Trägers fällt insbesondere bei kleinen angesaugten Luftmassen, also kleiner Kühlleistung und damit niedriger elektrischer Heizleistung prozentual besonders ins Gewicht und verfälscht dadurch den Meßwert.

Bei einer bekannten Vorrichtung dieser Art (DE-A-27 51 196) ist nicht entnehmbar, wie die Randbereiche in Längsrichtung des jeweiligen Trägers ausgebildet und gelagert sind und wo der temperaturabhängige Widerstand in bezug auf diese Randbereiche angeordnet ist. Außerdem sind dort Heizwiderstände an den Stirnflächen des Trägers angeordnet.

Einer weiteren bekannten Vorrichtung (DE-A-32 14 359) ist zu entnehmen, daß der temperaturabhängige Widerstand direkt mit Halterungen verbunden ist und Abschirmungen diese Verbindungsstellen überdecken.

### Vorteile der Erfindung

Die erfindungsgemäße Vorrichtung mit den Merkmalen von Anspruch 1 hat demgegenüber den Vorteil, daß durch das Festhalten der Randbereiche des Trägers auf der Temperatur des strömenden Mediums das Temperaturprofil in Längsausdehnung des Trägers stark ausgeprägt und zeitlich nahezu unverändert ist, so daß sich bei plötzlichen größeren Änderungen der Masse des strömenden Mediums nahezu keine Änderungen des Temperaturprofiles und damit kurze Einschalt- und Ansprechzeiten ergeben. Besonders vorteilhaft ist dies insbesondere bei der Verwendung der Vorrichtung zur Messung der Ansaugluftmasse bei Brennkraftmaschinen, was nur einen sehr geringen Aufwand erfordert und zugleich mit sich bringt, daß die in der Regel in den Randbereichen des Trägers erfolgende elektrische Kontaktierung zu den auf dem Träger aufgebrachten Widerstandsschichten durch Weichlöten erfolgen kann, da die Randbereiche beim Einsatz der Vorrichtung dann immer auf der relativ niederen Lufttemperatur gehalten werden.

Durch die in den abhängigen Ansprüchen aufgeführten Maßnahmen sind vorteilhafte Weiterbildungen und Verbesserungen der im Hauptanspruch angegebenen Vorrichtung möglich. Besonders vorteilhaft ist es, die Randbereiche des Trägers mit in der Mediumströmung angeordneten metallenen Wärmeleitelementen in Wärmekontakt zu bringen, die aus gut wärmeleitendem Material und geringer Masse gebildet sind. Von zusätzlichem Vorteil ist es, die gehäusefesten Haltekörper, die gleichzeitig als elektrische Anschlüsse dienen können, als Wärmeleitelemente auszubilden.

Besonders kurze Einschalt- und Ansprechzeiten ergeben sich bei der erfindungsgemäßen Ausgestaltung der Vorrichtung dadurch, daß in Längsausdehnung des Trägers beiderseits des temperaturabhängigen Widerstandes je ein als Schicht ausgebildeter Schutzheizwiderstand angeordnet und annähernd auf einer Temperatur gehalten ist, die mit der Widerstandstemperatur des temperaturabhängigen Widerstandes übereinstimmt.

### Zeichnung

Ausführungsbeispiele der Erfindung sind in der Zeichnung vereinfacht dargestellt und in der nachfolgenden Beschreibung näher erläutert. Es zeigen Figur 1 ein Schaltbild der erfindungsgemäßen Vorrichtung, Figur 2 ein Ausführungsbeispiel zur Veranschaulichung der geometrischen Anordnung der leitfähigen Schichten der Vorrichtung auf einen Träger, Figur 3 eine Ausgestaltung der Vorrichtung mit Wärmeleitelementen.

Beschreibung der Ausführungsbeispiele

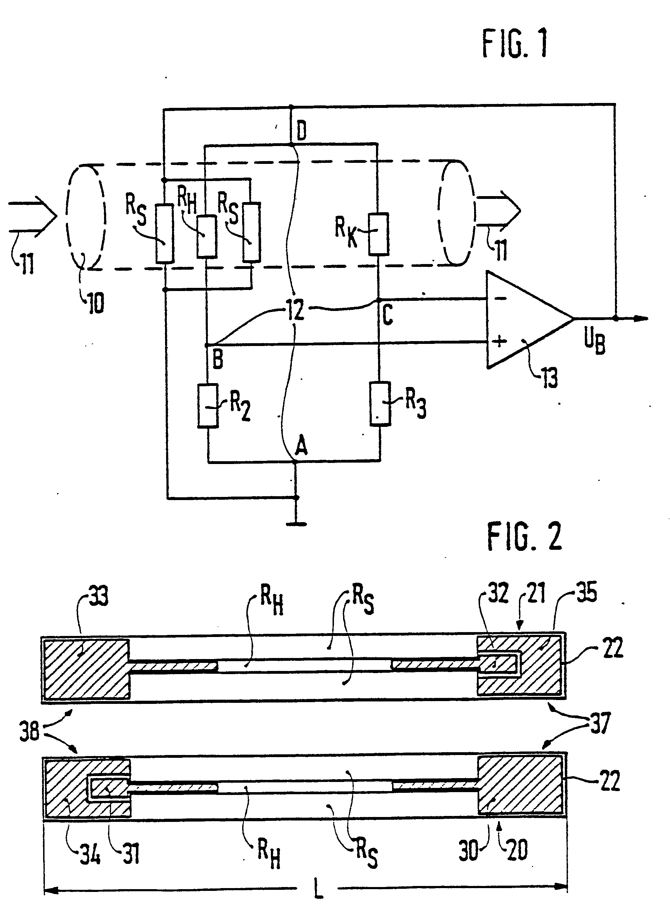

In Figur 1 ist mit der Bezugsziffer 10 ein von einem Medium durchströmtes Rohr, beispielsweise das Ansaugrohr einer Brennkraftmaschine, bezeichnet, wobei die Strömungsrichtung des Mediums mit Pfeilen 11 gekennzeichnet ist. Im allgemeinen ist es jedoch für die Erläuterung der Funktionsweise der erfindungsgemäßen Vorrichtung gleichgültig, wie die Strömungsrichtung definiert ist. In das strömende Medium ist ein temperaturabhängiger Widerstand $R_H$ eingebracht, der vorzugsweise einen positiven Temperaturkoeffizienten aufweist und zur Erfassung der Durchflußmasse des Mediums durch das Rohr 10 dient. Dieser Widerstand $R_H$ ist als Schichtwiderstand oder Fillmwiderstand auf einem in Figur 1 nicht dargestellten, insbesondere elektrisch isolierenden Träger (Substrat) ausgebildet und Bestandteil einer im vorliegenden Ausführungsbeispiel als Brückenschaltung ausgebildeten Widerstandserfassungsanordnung 12. Diese Widerstandserfassungsanordnung 12 wird ergänzt durch die Widerstände $R_K$, $R_2$ und $R_3$. Ausgehend vom Fußpunkt A dieser Widerstandsmeßbrücke sind in jeweils einem Brückenzweig die Widerstände $R_2$, $R_H$ sowie $R_3$ und $R_K$ in Serie geschaltet und die Anschlußleitungen der Widerstände $R_H$ und $R_K$ an Punkt D zusammengeführt. Einem Regelverstärker 13 werden die Signale vom Punkt B als Verbindungspunkt der Widerstände $R_2$ und $R_H$ sowie vom Punkt C als Verbindungspunkt der Widerstände $R_3$ und $R_K$ zugeführt. Im bevorzugten Ausführungsbeispiel der Figur 1 ist der Regelverstärker 13 als Differenzverstärker ausgebildet, wobei die Erfindung jedoch nicht auf derartige Differenzverstärker beschränkt, sondern im allgemeinen mit jeder analogen und digitalen Regelvorrichtung durchführbar ist.

Die Ausgangsgröße der Regelvorrichtung wird zum Punkt D der Widerstandserfassungsanordnung zurückgeführt, so daß insgesamt eine geschlossene Schleife entsteht. Die Widerstandswerte der Widerstände der Widerstandserfassungsanordnung 12 werden im allgemeinen derart gewählt, daß die Widerstände $R_K$, $R_3$ wesentlich höhere Werte als die Widerstände $R_H$, $R_2$ annehmen.

Die Widerstandserfassungsanordnung 12 kann nicht nur durch eine Brückenschaltung sondern auch durch andere Widerstandsmeßschaltungen realisiert werden. Die Erfindung ist daher nicht auf Brückenschaltungen beschränkt, sondern bezieht sich auch auf insbesondere brückenähnliche Meßschaltungen, wie sie beispielsweise in der US-PS 42 97 881 offenbart sind.

Die prinzipielle Wirkungsweise dieser Anordnung ist wie folgt :

Durch den Ausgangsstrom des Regelverstärkers 13 erfolgt eine Aufheizung des temperaturabhängigen Widerstandes $R_H$, wobei die Widerstandstemperatur dieses Widerstandes im wesentlichen durch die Verhältnisse der Brückenwiderstände gegeben ist. Über die geschlossene Schleife wird die vom temperaturabhängigen Widerstand $R_H$ abfließende Wärmemenge stets durch Änderung des zufließenden Stroms kompensiert, so daß der Widerstand $R_H$ auf einer bestimmten Widerstandstemperatur bzw. auf einen bestimmten Widerstandswert gehalten wird. Der Heizstrom, die Heizleistung oder auch die Ausgangsspannung des Regelverstärkers 13 sind ein Maß für die Durchflußmasse des strömenden Mediums.

Da eine schwankende Temperatur des Strömungsmediums während einer Messung auch die Widerstandstemperatur bzw. den Widerstandswert des temperaturabhängigen Widerstandes $R_H$ beeinflußt, wird der Widerstand $R_K$ ebenfalls dem strömenden Medium ausgesetzt, um diesen Effekt der Temperaturschwankungen des Mediums auf die Messung des Massendurchsatzes zu kompensieren. Auch dieser Widerstand $R_K$ ist bevorzugt als Film- bzw. Schichtwiderstand, beispielsweise aufgedampft auf ein Substrat, ausgebildet.

Um starke Änderungen des Temperaturprofils über den räumlichen Bereich des temperaturabhängigen Widerstandes $R_H$ bei Durchflußänderungen zu vermeiden, sind gesonderte Maßnahmen notwendig.

Wie theoretische und experimentelle Untersuchungen gezeigt haben, eignet sich hierzu bis zu einem gewissen Grad eine Schutzheizung am temperaturabhängigen Widerstand $R_H$, durch die die nähere Umgebung des Widerstandes $R_H$ auf der jeweiligen, durch die momentane Strömungsgeschwindigkeit und Temperatur des zu messenden Mediums bestimmten Übertemperatur gehalten wird.

Im vorliegenden Ausführungsbeispiel der Vorrichtung sind zwei Schutzheizwiderstände $R_S$ vorgesehen, die auf dem gleichen Träger wie der temperaturabhängige Widerstand $R_H$ angebracht sind und diesen einrahmen. Diese Widerstände $R_S$ der Schutzheizung lassen sich bevorzugt in der Technologie der Widerstände $R_H$ sowie $R_K$ herstellen und weisen ebenfalls den gleichen Flächenwiderstand auf. Beaufschlagt werden sie von der Ausgangsgröße des Regelverstärkers 13 und laufen gesteuert mit einem bestimmten, von der Widerstandstemperatur des Widerstandes $R_H$ abhängigen Temperaturwert mit. Damit die Temperaturen der Widerstände $R_S$ mit der Widerstandstemperatur des Widerstandes $R_H$ übereinstimmen, ist aufgrund des identischen Flächenwiderstandes dieser Widerstände jedoch für eine geeignete Geometrie der Widerstände zu sorgen.

Ein weiterer Vorteil dieser Anordnung resultiert aus der Tatsache, daß ein Großteil der erforderlich Heizleistung aus dem Brückenzweig mit den

Widerständen $R_H$, $R_2$ herausgenommen und den Schutzheizwiderständen $R_S$ zugeführt wird. Die am Widerstand $R_2$ auftretende Verlustleistung kann somit verringert werden. Eine weitere Maßnahme, nämlich die Verwendung der Ausgangsspannung des Regelverstärkers 13 als Meßgröße, erweist sich bei Änderungen der Lufttemperatur ebenfalls als positiv für die Leistungsbilanz der Gesamtanordnung. Darüber hinaus weist die Meßgröße $U_B$ einen hohen Signalhub auf, was der Genauigkeit der weiteren Meßdatenverarbeitung zugute kommt.

In Figur 2 ist eine Ausführungsform der Vorrichtung nach Figur 1 wiedergegeben. Mit 20 ist die Unterseite und mit 21 die Oberseite eines beispielsweise aus Keramik gefertigten Trägers 22 gekennzeichnet. Die Abmessungen des Trägers 22 liegen etwa bei einer Breite von 4 mm und einer Länge L von etwa 25 mm. Die Beschichtung der Ober- und Unterseite des Trägers 22 ist bezüglich der Widerstände $R_H$ und $R_S$ symmetrisch ausgebildet, wobei der temperaturabhängige Widerstand $R_H$ mit einer Länge von ca. 10 mm und einer Breite von ca. 0,5 bis 2 mm in der Mitte angeordnet ist. Die Widerstände $R_S$ sind beiderseits vom Widerstand $R_H$ aufgedampft und weisen eine Breite von etwa 1,5 mm und im vorliegenden Ausführungsbeispiel eine Länge von ca. 20 mm auf. Es ist jedoch zu beachten, daß das Längenverhältnis der Filmwiderstände $R_H$ und $R_S$ vom Widerstandsverhältnis der Brückenwiderstände $R_H$ zu $R_2$ abhängt. Die absolute Länge bestimmt sich aus der erforderlichen Integrationslänge von $R_H$, die unter anderem von den Strömungsverhältnissen am Meßort abhängt. Der vorliegende Fall bezieht sich auf eine symmetrische Brückenanordnung. Die schraffierten Flächen kennzeichnen niederohmige Leiterbahnen, wobei mit 30, 31, 32, 33 die Leiterbahnen für die elektrischen Anschlüsse bezüglich des Widerstandes $R_H$ bezeichnet sind. Dagegen sind die für die Widerstände $R_S$ benötigten Leiterbahnen durch die Bezugsziffern 34 und 35 gekennzeichnet. Die Anschlüsse 30 und 33 sind für $R_S$ und $R_H$ identisch und entsprechen dem Punkt D in Figur 1.

In Figur 2 wurden die Widerstände $R_H$ und $R_S$ in jeweils zwei Widerstände aufgeteilt. Durch diese Maßnahme lassen sich die Widerstände $R_H$ und $R_S$ auf beiden Seiten des Trägers 22 anbringen, so daß eine wesentlich homogenere Temperaturverteilung der Widerstandstemperaturen des Widerstandes $R_H$ gewährleistet ist.

Die Widerstände $R_H$ auf der Unterseite 20 und der Oberseite 21 sind beispielsweise in Parallelschaltung angeordnet. Die Widerstände $R_S$, die zur Schutzheizung der Widerstände $R_H$ dienen, umschliessen jeweils paarweise den Widerstand $R_H$ auf der Unterseite 20 und Oberseite 21 des Trägers 22. Auch die Schutzheizwiderstände $R_S$ sind im vorliegenden Ausführungsbeispiel parallel geschaltet. Sie können natürlich auch in Serie geschaltet sein, wie auch die Widerstände $R_S$.

Die Leiterbahnen 30, 34 auf der Unterseite 20 und 33, 35 auf der Oberseite 21 sind in Längsausdehnung L des Trägers 22 jeweils einander gegenüberliegend in je einem Randbereich 37 bzw. 38 des Trägers angeordnet. Die Randbereiche 37 bzw. 38 des Trägers 22 sollen gemäß der Erfindung auf der Temperatur des strömenden Mediums, also beispielsweise der Temperatur der Ansaugluftmasse bei der Anwendung im Ansaugrohr von Brennkraftmaschinen gehalten werden.

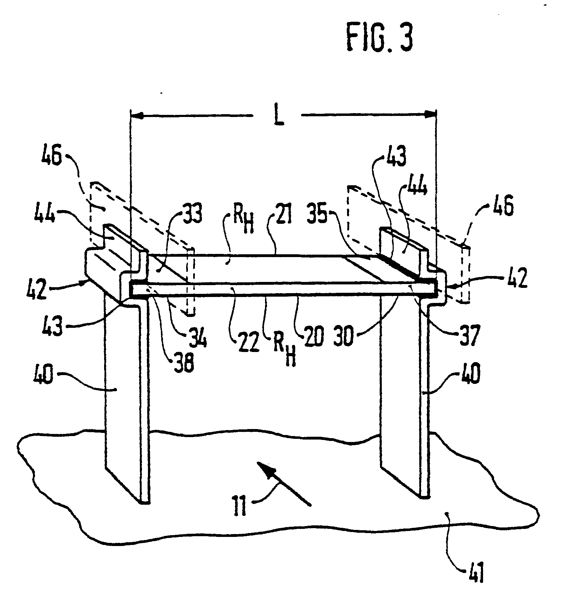

Wie die Randbereiche 37 bzw. 38 auf der Mediumtemperatur gehalten werden, wird anhand des in Figur 3 dargestellten Ausführungsbeispieles erläutert, bei dem die gegenüber den Figuren 1 und 2 gleich gebliebenen und gleichwirkenden Teile durch die gleichen Bezugszeichen gekennzeichnet sind. Die Vorrichtung nach Figur 3 weist einen Träger 22 auf, auf dessen Unterseite 20 bzw. Oberseite 21 jeweils ein temperaturabhängiger Widerstand $R_H$ im mittleren Bereich des Trägers angeordnet ist, wobei die als Schichten ausgebildeten Widerstände $R_H$ beispielsweise elektrisch parallel geschaltet sind. Bei dem Ausführungsbeispiel nach Figur 3 sind keine die Widerstände $R_H$ umrahmenden Schutzheizwiderstände $R_S$ vorgesehen. In den Randbereichen 37 bzw. 38 des Trägers 22 sind die elektrischen Leiterbahnen 30 und 34 auf der Unterseite 20 sowie 33 und 35 auf der Oberseite 21 angeordnet. Der Träger 22 ist möglichst so in der Mediumströmung angeordnet, daß die die Widerstände $R_H$ aufnehmenden Flächen des Trägers 22 annähernd parallel zur Strömungsrichtung 11 verlaufen. Die Lagerung des Trägers 22 im Mediumstrom erfolgt durch mindestens einen Haltekörper 40, der blattfederförmig ausgebildet mit seinem einen Ende in einem Gehäuse 41, beispielsweise der Wandung des Rohres 10 bzw. Ansaugrohres 10 befestigt ist. Wie bei dem Ausführungsbeispiel nach Figur 3 gezeigt ist, können zur Lagerung des Trägers 22 auch zwei Haltekörper 40 dienen. Die Haltekörper 40 sind aus Metall gefertigt und sollen eine möglichst gute Wärmeleitfähigkeit und elektrische Leitfähigkeit haben, so daß über die Haltekörper 40 die elektrische Kontaktierung der Widerstände $R_H$ erfolgen kann. Hierfür ragen die Haltekörper 40 in die Mediumströmung 11 und weisen U-förmige Verformungen 42 auf, die die Randbereiche 37 und 38 teilweise umgreifen und zu denen mittels einer Verlötung 43 ein guter elektrischer Kontakt mit den Leiterbahnen 30, 33, 34, 35 herstellbar ist.

Gemäß der Erfindung sollen die Randbereiche 37, 38 auf der Temperatur des strömenden Mediums gehalten werden. Hierzu können die in die Mediumströmung ragenden Haltekörper 40 als Wärmeleitelemente dienen, die außer einer guten Wärmeleitfähigkeit auch eine möglichst geringe Masse aufweisen sollen, um bei einer Änderung der Temperatur der Mediumströmung ebenfalls schnell diese Temperatur annehmen zu können. Zur Vergrößerung der Wärmetauscherflächen der Haltekörper 40 kann es zweckmäßig sein, dem Gehäuse 41 abgewandt die Haltekörper 40 anschliessend an die U-förmigen Verformungen 42 mit Wärmeleitflächen 44 zu versehen. Diese Wärmeleitflächen 44 können an die Haltekörper 40 angeformt sein oder mit diesen in guter thermischer Verbindung verbunden sein.

Bei einer weiteren Ausführungsform sind in der Nähe der Randbereiche 37, 38 gestrichelt dargestellte plattenförmige Wärmeleitelemente 46 angeordnet, die aus gut wärmeleitendem Material bestehen und beispielsweise mit den Wärmeleitflächen 44 der Haltekörper 40 verbunden oder in die U-förmigen Verformungen 42 eingeformt sind und die bisher geschilderte Funktion der Haltekörper 40 bezüglich des Temperaturangleiches der Randtemperatur der Randbereiche 37, 38 übernehmen oder ergänzen. Die in der Figur 3 dargestellte Ausführungsform läßt sich natürlich auch auf eine Ausgestaltung der Vorrichtung mit Schutzheizwiderständen $R_S$ entsprechend der Figur 2 übertragen.

Dadurch, daß entsprechend der Erfindung die Randbereiche 37, 38 des Trägers 22 auf der Temperatur der Mediumströmung gehalten werden, die wie auch die Widerstandstemperatur am temperaturabhängigen Widerstand $R_H$ vorbestimmt ist, ergibt sich in Längsausdehnung L des Trägers 22 auch bei Änderungen der Masse des strömenden Mediums ein gleichbleibendes Temperaturprofil, so daß sich nicht nur kürzere Einschaltzeiten ergeben, sondern auch kürzere Ansprechzeiten auf plötzliche Änderungen der Masse der Mediumströmung, insbesondere bei einer plötzlichen Verminderung der Masse des strömenden Mediums, wie sie beispielsweise dann erfolgt, wenn im Kraftfahrzeug aus dem Vollastbereich der Fahrer des Kraftfahrzeuges das Gaspedal losläßt, das damit in seine Leerlaufstellung zurückgeht. Die Verkürzung der Einschalt- und Ansprechzeiten bei einer gemäß der Erfindung ausgestalteten Vorrichtung beruht darauf, daß bei Änderungen der Mediumströmung in Längsausdehnung des Trägers 22 das Temperaturprofil weitgehend erhalten bleibt uni damit kein Wärmestrom zur Anpassung an die geanderte Kühlleistung des vorbeiströmenden Mediums erforderlich ist. Vorteilhaft ist ebenfalls, daß sich die der elektrischen Kontaktierung dienenden Randbereiche 37, 38 des Trägers 22 auf der Temperatur des strömenden Mediums, also in der Regel auf der Temperatur der Luft befinden, so daß die Kontaktierung an diesen auf relativ niedriger Temperatur liegenden Randbereichen 37, 38 durch Weichlöten erfolgen kann.

## Patentansprüche

1. Vorrichtung zur Messung der Masse eines strömenden Mediums, insbesondere zur Messung der Ansaugluftmasse von Brennkraftmaschinen mit mindestens einem in der Mediumströmung (10) angeordneten und als Schicht ausgebildeten temperaturabhängigen Widerstand ($R_H$), der auf einer annähernd in Mediumströmungsrichtung (11) verlaufenden Fläche (20, 21) eines Trägers (22) aufgebracht ist, wobei eine mit einer Regelvorrichtung (13) zu einer geschlossenen Schleife verbundene Widerstandserfassungsanordnung den Widerstandswert des temperaturabhängigen Widerstandes ($R_H$) erfaßt und der temperaturabhängige Widerstand ($R_H$) mittels der Regelvorrichtung (13) durch Zuführung von Energie auf eine bestimmte Widerstandstemperatur geregelt wird, dadurch gekennzeichnet, daß der temperaturabhängige Widerstand ($R_H$) in Längsausdehnung (L) auf einem Teil des Trägers (22) neben mindestens einem zur Halterung des Trägers (22) in der Mediumströmung (10) dienenden Randbereich (37, 38) des Trägers (22) liegt, daß in Längsausdehnung (L) des Trägers (22) und auf derselben Fläche (20, 21) des Trägers (22) beiderseits des temperaturabhängigen Widerstandes ($R_H$) je ein als Schicht ausgebildeter Schutzheizwiderstand ($R_S$) angeordnet und annähernd auf einer Temperatur gehalten ist, die mit der Widerstandstemperatur des temperaturabhängigen Widerstandes ($R_H$) übereinstimmt, daß in der Mediumströmung (10) mindestens ein metallenes Wärmeleitelement (40, 44, 46) angeordnet ist, das mit dem wenigstens einen Randbereich (37, 38) des Trägers (22) wärmeleitend verbunden ist und daß der mindestens eine Randbereich (37, 38) des Trägers (22) in der Mediumströmung (10) liegt.

2. Vorrichtung nach Anspruch 1, dadurch gekennzeichnet, daß das Wärmeleitelement (40, 44, 46) aus gut wärmeleitendem Material und mit geringer Masse ausgebildet ist.

3. Vorrichtung nach Anspruch 1, dadurch gekennzeichnet, daß als Wärmeleitelement mindestens ein gehäusefester Haltekörper (40, 44) dient, der an einem Randbereich (37, 38) des Trägers (22) angreift.

4. Vorrichtung nach Anspruch 3, dadurch gekennzeichnet, daß der als Wärmeleitelement ausgebildete Haltekörper (40, 44) zugleich als elektrischer Anschluß dient.

## Claims

1. Apparatus for measuring the mass of a flowing medium, in particular for measuring the intake air mass of internal-combustion engines, having at least one temperature-dependent resistor ($R_H$), which is arranged in the medium flow (10), is designed as a layer and is applied to the surface (20, 21) of a base (22) running approximately in medium flow direction (11), a resistance detection arrangement, connected to a control apparatus (13) to form a closed loop, detecting the resistance value of the temperature-dependent resistor ($R_H$) and the temperature-dependent resistor ($R_H$) being controlled to a certain resistance temperature by the supply of energy by means of the control apparatus (13), characterized in that the temperature-dependent resistor ($R_H$) lies in the longitudinal extent (L) on a part of the base (22) next to at least one edge region (37, 38) of the base (22), serving to retain the base (22) in the medium flow (10), in that in each case there is a protective heating resistor ($R_S$), designed as a layer, arranged in the longitudinal extent (L) of the base (22) and on the same surface (20, 21) of the base (22) on either side of the temperature-dependent resistor ($R_H$) and kept approximately at a temperature which coincides with the resistance temperature of the temperature-dependent resistor ($R_H$), in that in the medium flow (10) there is arranged at least one metallic heat-conducting element (40, 44, 46), which is connected thermally conductively to the at least one edge region (37, 38) of the base (22) and in that the at least one edge region (37, 38) of the base (22) lies in the medium flow (10).

2. Apparatus according to Claim 1, characterized in that the heat-conducting element (40, 44, 46) is formed from thermally well conducting material and with low mass.

3. Apparatus according to Claim 1, characterized in that at least one retainer (40, 44), fixed to the housing, serves as heat-conducting element, acting on an edge region (37, 38) of the base (22).

4. Apparatus according to Claim 3, characterized in that the retainer (40, 44) designed as heat-conducting element serves at the same time as electric terminal.

**Revendications**

1. Procédé pour la mesure de la masse d'un fluide en écoulement, en particulier pour la muse de la masse d'air aspiré de moteurs à combustion interne, avec au moins une résistance ($R_H$) fonction de la température, disposée dans l'écoulement de fluide (10) réalisée en couche, résistance appliquée sur la surface (20, 21) d'un support (22), surface se développant approximativement en direction de l'écoulement du fluide (11), à l'occasion de quoi un dispositif de saisie de résistance relié en boucle fermée à un dispositif de réglage (13) saisit la valeur de résistance de la résistance ($R_H$) fonction de la température, et la résistance ($R_H$) fonction de la température étant réglée à une certaine température de résistance par une alimentation en énergie, au moyen du dispositif de réglage (13), caractérisé en ce que la résistance ($R_H$) fonction de la température est située dans la dimension longitudinale (L) sur une partie du support (22), à côté d'au moins une zone de bordure (37, 38) du support (22), servant à la fixation du support (22) dans l'écoulement de fluide (10), en ce qu'une résistance de chauffage de protection ($R_S$), chaque fois réalisée sous forme de couche est disposée dans la dimension longitudinale (L) du support (2) et sur la même surface (20, 21) du support (22) des deux côtés de la résistance ($R_H$) fonction de la température, cette résistance ($R_S$) étant approximativement maintenue a une température qui coïncide avec la température de résistance de la résistance ($R_H$) fonction de la température, en ce qu'au moins un élément conducteur de la chaleur en métal (40, 44, 46) est disposé dans l'écoulement de fluide (10) et est relié de manière à conduire la chaleur à au moins une zone de bordure (37, 38) du support (22) et en ce que la zone de bordure (37, 38) du support (22), zone au moins au nombre de un, se trouve dans l'écoulement de fluide (10).

2. Dispositif selon la revendication 1, caractérisé en ce que l'élément conducteur de la chaleur (40, 44, 46) est réalisé en un matériau bon conducteur de la chaleur et de faible masse.

3. Dispositif selon la revendication 1, caractérisé en ce qu'au moins un corps de maintien (40, 44) fixe sur le carter sert d'élément conducteur de la chaleur et vient en prise sur une zone de bordure (37, 38) du support (22).

4. Dispositif selon la revendication 3, caractérisé en ce que le corps de maintien (40, 44) réalisé sous forme d'élément conducteur de la chaleur sert simultanément de raccordement électrique.

FIG. 1

FIG. 2

## FIG. 3